# EUROPÄISCHE PATENTANMELDUNG

(11) **EP 0 688 119 A1**
(43) Veröffentlichungstag der Anmeldung: **20.12.1995**
(21) Anmeldenummer: 95107296.6
(22) Anmeldetag: 13.05.1995
(51) Int. Cl.: H04L 12/28

(54) **Verfahren und Vorrichtung zum eineindeutigen Aktivieren von Busteilnehmern in Informationsnetzwerken**

(30) Priorität: 15.06.1994 CH 1882/94
(71) Anmelder: Levy Fils AG, CH-4013 Basel (CH)
(72) Erfinder: Gut, Max B., Dipl.-Ing., CH-6353 Weggis (CH)
(74) Vertreter: OK pat AG

(57) **Zusammenfassung**

Zur Aktivierung von Busteilnehmern in Form einer in der Hausinstallationstechnik gebräuchlichen Leuchte (**12**), mit einem in dieser integrierten Lichtsensor (**11**), wird durch eine Bedienungsperson (**13**) dadurch realisiert, dass diese kurzzeitig mit einem Laserpointer (**14**) polarisiertes Licht auf den Lichtsensor sendet und dieser daraus ein digitalisiertes Signal erzeugt aufgrund dessen der Busteilnehmer zur physikalischen Adressierung aktiviert wird.

## Beschreibung

Die Erfindung betrifft ein Verfahren und eine Vorrichtung zum eineindeutigen Aktivieren von Busteilnehmern in Informationsnetzwerken, insbesondere für Servicezwecke, wobei diese durch Drahtverbindungen miteinander verknüpfte Kommunikationspartner von Computersystemen darstellen.

Informationsnetzwerke dieser Art, stellen meistens vernetzte Computersysteme dar, die informationstechnisch derart miteinander verbunden sind, dass ein gegenseitiges Informationsaustauch möglich ist. Dabei bedient man sich topologisch gesehen, hauptsächlich der Bustechnologie, bei welcher die einzelnen Kommunikationspartner -Busteilnehmer- über ein Kommunikationsmedium, meist Drahtverbindung, derart miteinander verbunden sind, dass jeder Busteilnehmer an jedem Ort und zu jeder Zeit das gleiche empfängt und hört wie alle anderen Teilnehmer.

Beispiele solcher Systeme sind z.B.: CAN Bus, Profi-Bus, EIBus, Ethernet, ect. Zur Sicherstellung eines geordneten Datenverkehrs bedient man sich eines Protokolls, welches festlegt zu welchem Zeitpunkt welcher Busteilnehmer mit welchem anderen Busteilnehmer oder welchen anderen Busteilnehmern in Kontakt treten kann.

Dabei werden die Informationen zwischen den einzelnen Busteilnehmern in Informationspakete verpackt und als sogenannte Telegramme zwischen den einzelnen Busteilnehmern übertragen.

Charakteristisch und gemeinsam (mit Ausnahme von Systemen, die nur Rundsprüche zulassen) an allen solchen Telegrammen ist, dass sie zumindest aus einem Adress- und Datenteil bestehen. Durch den Adressteil wird ein oder mehrere Busteilnehmer aktiviert und zum Empfang eines Datenteils aufgefordert.
Die Adresse selbst kann dabei aus einem physikalischen und einem logischen Adressteil bestehen.

Bei der physikalischen Adresse wird damit genau ein Busteilnehmer eineindeutig aktiviert. Bei der logischen Adresse ist die Eineindeutigkeit nicht notwendig. Sie wird nur dann verwendet, wenn eine In Beziehung zwischen Informationsquelle und Informationssenke implementiert werden soll. Die logische Adressierung kann somit auch eine Gruppenadresse sein bei der eine ganze Gruppe von Busteilnehmern gleichzeitig adressiert wird oder eine Telegrammnummer womit indirekt sich einzelne Busteilnehmer aufgrund des Informationsinhaltes aktiviert fühlen.

Auch wenn innerhalb eines Bussystems eine logische Adressierung verwendet wird, so muss meist aus Servicegründen trotzdem eine physikalische Adressierung ebnfalls vorhanden sein. Solche Servicegründe können beispielsweise sein: Statusabfrage eines einzelnen bestimmten Busteilnehmers oder beabsichtigter Programmdownload auf einen bestimmten Busteilnehmer.

Daraus ergibt sich dass die physikalische Adresse bei jedem Busteilnehmer wenigstens einmal -im Installationsmode- festgelegt oder dem Busteilnehmer in irgend einer Form eineindeutig mitgeteilt werden muss.

Beim Stand der Technik erfolgt dies beispielsweise durch Jumpers oder Schalter, die vor der definitiven Montage des Busteilnehmers an seinen definitiven Platz festgelegt und/oder eingestellt werden. Es hat sich jedoch gezeigt, dass dies sehr nachteilige Auswirkungen haben kann, denn die Verwechselungsgefahr bei der Montage ist gross und auch bei grosser Sorgfalt ist diese nicht auszuschliessen.

Eine weitere Installationsart ist ebenfalls bekannt, wie sie beispielsweise beim EIBus angewendet wir: Die Busteilnehmer werden dabei noch nicht differenziert installiert, sondern die Adressvergabe erfolgt erst nach der endgültigen Installation am Ort. Dabei mechanisches Drücken einer Selektionstaste am Busteilnehmer wird dieser eineindeutig selektioniert und die Adresse danach über einen bereits installierten Bus übermittelt.
Fehlmanipulationen sind bei solchen Anordnungen recht selten. Es hat sich aber als sehr nachteilig erwiesen, dass eine solche Adressierung bei schwer zugänglichen Busteilnehmern umständlich ist und oft nur mit erheblichem Aufwand durchzuführen ist.
Beispielsweise bei Deckenleuchten oder Heizungsstrahlern im Haustechnikbereich, bei welchen sich der Installateur zur Aktivierung des Busteilnehmers zur Leuchte bewegen muss, um die Selektionstaste zu bedienen setzt sich im manchen Fällen sogar einer nicht unerheblichen Unfallgefahr aus.
Damit ist diese Installationsart nicht nur zeitraubend, sondern auch noch serviceunfreundlich.

Es ist damit Aufgabe der Erfindung die Nachteile des Standes der Technik zu vermeiden und ein Verfahren und eine Vorrichtung vorzuschlagen, das grosse Flexibilität bei der Zuteilung der physikalischen Adresse an Busteilnehmer in der Installationsphase bzw. im Servicemode gestattet.

Diese Aufgabe wird erfindungsgemäss durch die Merkmale der kennzeichnenden Teile der Patentansprüche **1** und **10** gelöst. Vorteilhafte Weiterbildungen werden durch die abhängigen Patentansprüche **2** bis **9** und **11** bis **14** definiert.

Erfindungsgemäss wird also die Selektionstaste durch einen optischen Sensor ersetzt, dieser empfängt einen gerichteten, sichtbaren Lichtstrahl aus einer im Abstand dazu vorgesehenen Lichtquelle, wird aktiviert indem er ein digitales Signal aussendet, das vom Busteilnehmer erkannt wird und ihn in den Servicemode zur physikalischen Adressvergabe versetzt.

Im einfachsten Fall wird der Lichtstrahl durch eine starke Lichtquelle erzeugt. Besser eignet sich jedoch die Verwendung eines sogenannten Laserpointers, wie er z.B. für Diashows etc. schon Anwendung findet.
Es ist durchaus auch daran gedacht, eine Licht im unsichtbaren Bereich emmitierende Lichtquelle zu verwenden. Voraussetzung dazu wäre allerdings die Verwendung einer Visiereinrichtung, sodass diese Lösung wieder aufwendiger und kostenintensiver wird.

Gesamthaft gesehen hat das erfindungsgemässe Verfahren die Vorteile, dass
- der Busteilnehmer nicht mehr physisch erreichbar sein muss,
- nur noch eine optische Sichtverbindung zum Busteilnehmer erforderlich ist,
- der Prozess der Adressvergabe und des eventuellen Programmdownloads wesentlich vereinfacht und beschleunigt wird
- und ein Zugriffsschutz, gegen eine allfällige Bedienung von Unbefugten, einfach erreichbar ist.

Weitere Einzelheiten des erfindungsgemässen Verfahrens und vorteilhafte Ausgestaltungen der erfindungsgemässen Vorrichtung werden im folgenden anhand von Ausführungsbeispielen und mit bezug auf die Zeichnungen ausführlich beschrieben. Es zeigt:
- **Fig. 1**: Eine Netzwerk Busstruktur;
- **Fig. 2**: ein typisches Beispiel eines Protokolls;
- **Fig. 3**: ein erstes Ausführungsbeispiel aus der Haustechnik zum Stand der Technik;
- **Fig. 4**: ein zweites Ausführungsbeispiel aus der Haustechnik nach der erfindungsgemässen Lehre;
- **Fig. 5**: ein elektrisches Schaltbild des ersten Ausführungsbeispiels;
- **Fig. 6**: ein elektrisches Schaltbild des zweiten Ausführungsbeispiels;
- **Fig. 7**: ein elektrisches Schaltbild eines dritten Ausführungsbeispiels;
- **Fig. 8**: eine komplette Systemdarstellung eines zweiten Ausführungsbeispiels;
- **Fig. 9**: eine komplette Systemdarstellung eines vierten Ausführungsbeispiels;
- **Fig. 10**: eine komplette Systemdarstellung eines fünften Ausführungsbeispiels.

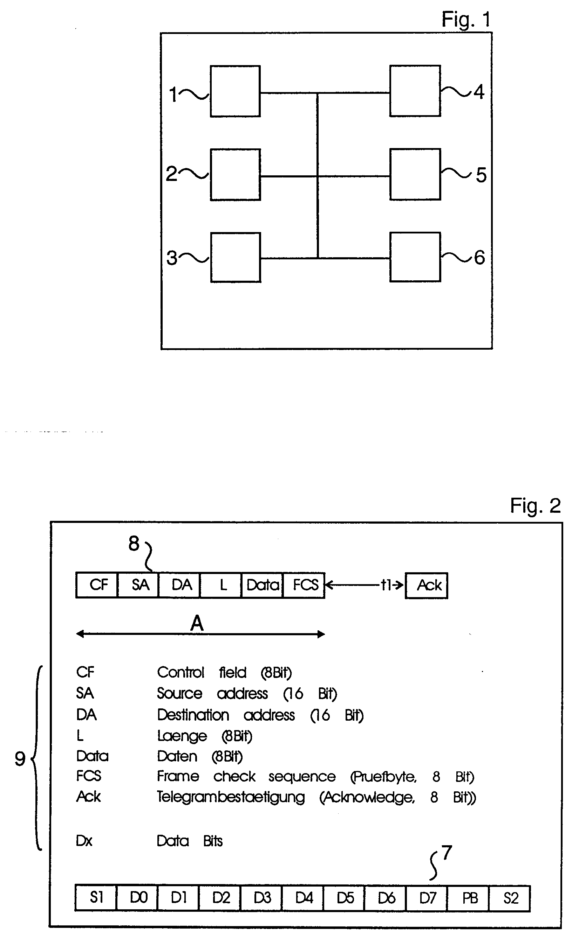

**Fig. 1** zeigt eine Topologie eines Netzwerks eines Bussystems **B** mit sechs Busteilnehmern **1, 2, 3, 4, 5** und **6**. Die Busteilnehmer sind via Drahtverbindungen, derart miteinander verbunden, dass ein jeder Busteilnehmer **1, 2, 3, 4, 5** und **6** an jedem Ort und zu jeder Zeit das gleiche empfängt und hört als alle anderen Teilnehmer. Die Busteilnehmer selbst sind damit gleichberechtigte Kommunikationsmitglieder.

**Fig. 2** zeigt ein typisches CSMA Protokoll und den zugehörigen Telegrammaufbau und die entsprechenden Charakterdefinitionen **7**. Dabei stellt die Angabe im **DA**-Feld eines Telegramms **8** mit der gesamten Telegrammlänge **A**, je nach Inhalt des Controllfeldes **CF,** eine physikalische oder logische Adresse dar. Der gesamte Inhalt des Telegramms **8** ist im Inhaltsverzeichnis **9** aufgeführt.

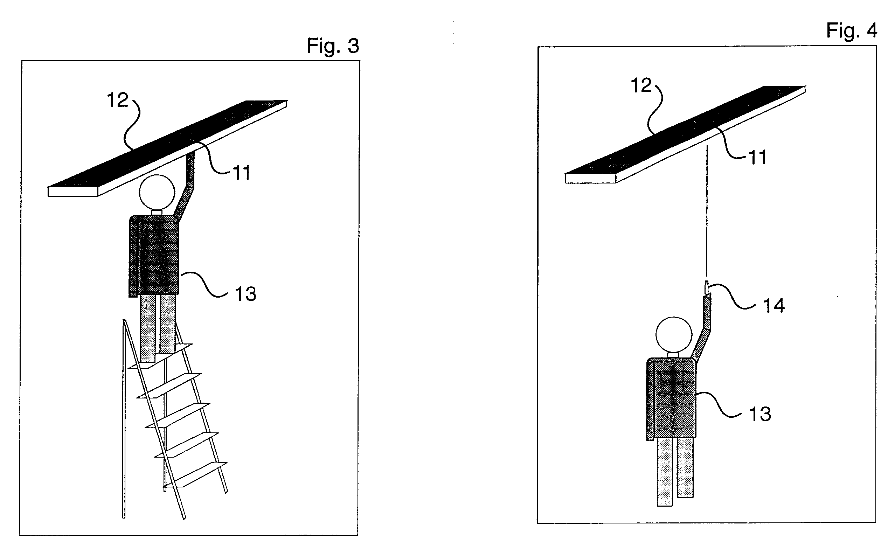

**Fig. 3** zeigt ein erstes Ausführungsbeispiel aus dem Stand der Technik, das bewusst aus der Hausinstallationstechnik gewählt wurde, da dort besonders exemplarisch gezeigt werden kann, wo die Erfindung ansetzt. Bei einer Leuchte **12** ist ein integrierter Busteilnehmer **11** vorgesehen, der eine von einer Bedienungsperson **13** mechanisch zu betätigende Taste umfasst, mit dem der Busteilnehmer **11** im Installationsmode aktiviert wird und dem dann die Adresse über den bereits installierten Bus übermittelt wird.

**Fig. 4** zeigt ein zweites Ausführungsbeispiel das hingegen nach der erfindungsgemässen Lehre ausgestattet ist. Dabei wird der Busteilnehmer **11** der in der Leuchte **12** integriert ist physisch von der Bedienungsperson **13** nicht mehr berührt, um im Installationsmode die Aktivierung der Adresse zu realisieren, sondern diese Bedienungsperson **13** kann sich im Abstand zur Leuchte **12** befinden und problemlos mit einer Leuchte (Laserpointer) **14** den Busteilnehmer **11** aktivieren.

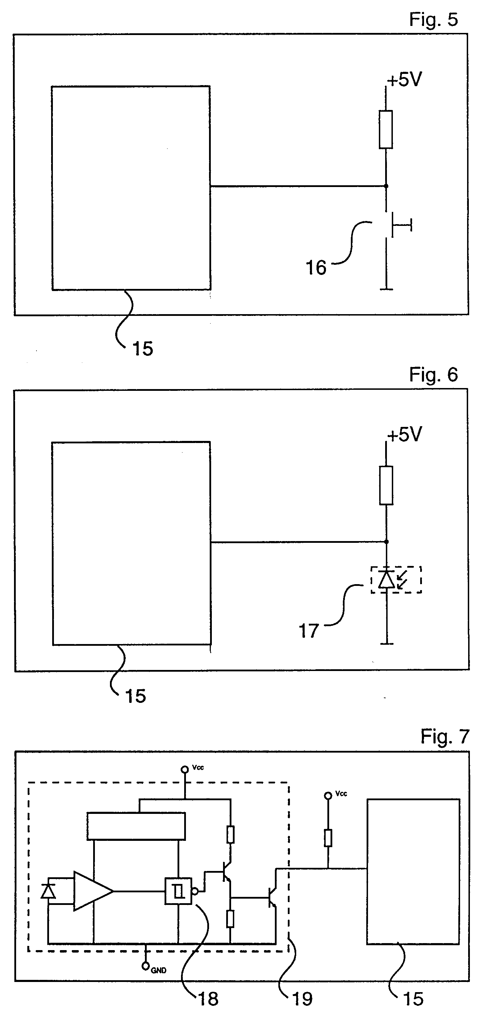

**Fig. 5** zeigt ein elektrisches Schaltbild des ersten Ausführungsbeispiels und damit des Standes der Technik. Dabei ist ein Microprozessor **15** vorgesehen, der ebenfalls die entsprechende Schaltung für den zugehörigen Busteilnehmer enthält. Eine Servicetaste **16** stellt die mechanisch betätigbare Aktivierung für den Busteilnehmer zum Initialisieren der Adresse im Imstallationsmode dar.

**Fig. 6** zeigt ein elektrisches Schaltbild des zweiten Ausführungsbeispiels und damit dasjenige bei welchem die erfindungsgemässe Vorrichtung vorgesehen ist. Wieder repräsentiert der Microprozessor **15** die Schaltung für den entsprechenden Busteilnehmer.

Anstelle der Servicetaste ist aber hier ein Lichtsensor, gebildet durch eine Photodiode oder einen lichtabhängigen Widerstand, **17** vorgesehen, der bei genügend starkem Lichteinfall den Eingang des Busteilnehmers in einen anderen logischen Zustand zu versetzen vermag.

Noch besser geeignete Schaltungen dieser Art, sind beispielsweise solche, wie sie vom Aufbau her in **Fig. 7** als drittes Ausführungsbeispiel gezeigt sind. Nämlich ein vollständiger optoelektronischer Empfänger **19**, mit Schmitt-Trigger **18** am Ausgang, wie beispielsweise unter der Markenbezeichnung (Honeywell: SD 5314-301) bekannt. Solche Schaltungen haben den Vorteil ab dem Auftreten oder Überschreiten eines bestimmten Schwellwertes direkt ein binäres Signal zu generieren. Damit erübrigt sich der Unsicherheitsbereich bei veränderlicher Beleuchtung durch einen Laserpointer.

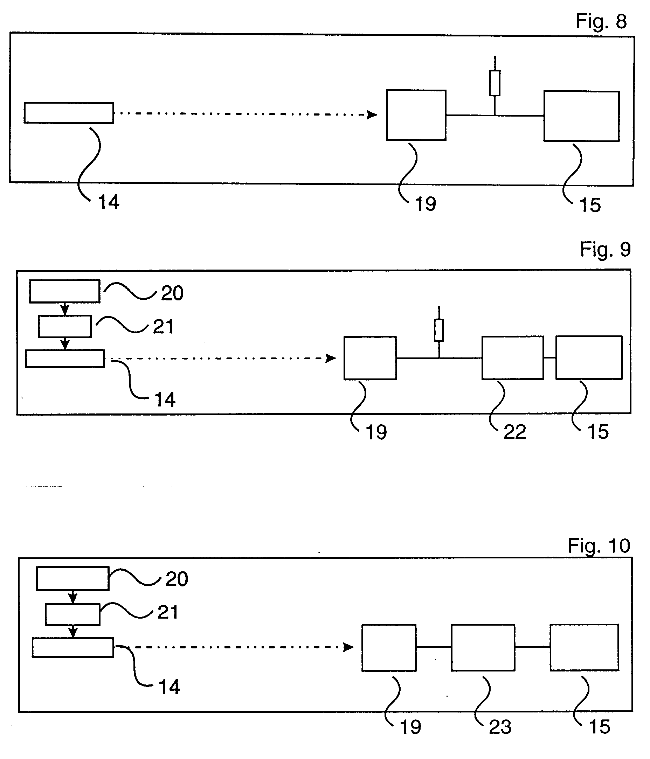

Die vollständige Vorrichtung zur Übertragung des Aktivierungssignals ist in **Fig. 8** als komplette Systemdarstellung unter Verwendung des zweiten Ausführungsbeispiels gezeigt. Bei diesem Ausführungsbeispiel wird ausschliesslich die Aktivierung realisiert. Über den Laserpointer **14** wird der optische Sensor mit Schmitt-Trigger Ausgang, der vollständige optoelektronische Empfänger **19** mit einem Lichtstrahl **L** beschickt und dieser Lichtstrahl **L** bewirkt somit, dass der im Microprocessor **15** integrierte Busteilnehmer aktiviert wird, d.h. zur physikalischen Adressierung bereit ist.

Die Adressvergabe kann also wie folgt durchgeführt werden:
a) Der Busteilnehmer (**11, 15**) wird fest und definitiv an seinem Ort installiert;
b) Über die Lichtquelle (Laserpointer) **14** sendet der Installateur einen gezielten Lichtstrahl **L** zum Busteilnehmer (**11, 15**);
c) der Busteilnehmer (**11, 15**) wird dadurch aktiviert und meldet über eine der Übersichtlichkeithalber nicht gezeichnete Leuchtdiode (die dann leuchtet!) seine Aktivierung, beispielsweise über den bereits installierten Bus;
d) die Bedienungsperson **13** übermittelt nun die physikalische Adresse an den Busteilnehmer (**11, 15**).

Wird die Reihenfolge der Busteilnehmer im voraus festgelegt, so kann die physikalische Adresse und gegebenenfalls das Programm, wie nachfolgend beschrieben wird, automatisch übermittelt werden, womit sich eine zweite Person zur Bedienung des Hauptcomputers erübrigt, die die Adresse zu übersenden hätte.

Wie in **Fig. 9** gezeigt kann bei einer weiteren kompletten Systemdarstellung eines vierten Ausführungsbeispiels dem Laserpointer **14** ein Codegenerator **20** und/oder ein optisches Filter oder Modulator **21** vorgeschaltet werden. Dadurch wird erreicht, dass das Selektioniern Zuverlässiger wird, odert dass unerwünschte Störquellen ferngehalten werden.
Ein entsprechendes optisches Filter **21** lässt beispielsweise nur Licht mit der Wellenlänge des Laserpointers durch. In der gleichen Richtung zielen Massnahmen wie Polarisation des Lichtes (z. B. zirkular) oder seine Modulation sowie entsprechende Massnahmen auf der Sensorseite. Mit all solchen Massnahmen sind Fehlselektionen erheblich verminderbar.

Ebenso ist konstruktiv vorgesehen den Lichtsensor **17** in ein röhrenförmiges Gehäuse einzubauen, sodass nur in der Axe einfallendes Licht eine Selektion des Busteilnehmers auslöst.

Will man die Zugriffssicherheit erhöhen bzw. das System gegen allfällige Bedienung von Unbefugten schützen, so kann man das Licht des Laserpointers mit einem Codegenerator **20** und dem entsprechenden Modulator **21** modulieren. Zusätzlich kann man mit solchen Massnahmen dafür sorgen, dass das Selektionsgerät eine solche Modulation über einen Codedetektor **22** als Befehl erkennt und beispielsweise über den Bus sämtliche Sensoren vorerst konditioniert.

An sich stellt die optische Verbindung zwischen Lichtquelle und Lichtsensor am Busteilnehmer bei einem solchen kompletten System, wie es in **Fig. 10** gezeigt ist, einen zusätzlichen Kommunikationskanal zum Busteilnehmer dar. Es bietet sich also geradezu an den Codedetektor in einem Microprozessor **23** zu integrieren und letzteren auch dafür vorzusehen einen Programmdownload entgegen zunehmen.

Gleich wie der aktivierte Busteilnehmer eine Aktivierungsmeldung über den Bus senden kann und danach von einem anderen vorbestimmten Busteilnehmer eine Adresse empfängt kann auch vorgesehen sein, dass für alle Busteilnehmer eine globale Freigabe zur Aktivierung der Adressierung vorgesehen wird, die durch ein über den Bus gesandtes allgemeines Freigabetelegramm erfolgt und nach Abschluss der Service- und/oder Installationsphase durch ein Inhibittelegramm weitere Aktivierungen ausgeschlossen werden.

Es ist hingegen auch -im sogenannten LON-Mode- vorgesehen, eigenständig durch den Laserpointer dem Busteilnehmer eine weltweit eineindeutige Adresse übermitteln zu können.

## Patentansprüche

1. Verfahren zum eineindeutigen Aktivieren von Busteilnehmern in Informationsnetzwerken, insbesondere in der Servicephase, wobei diese durch Drahtverbindungen miteinander verknüpfte Kommunikationspartner von Computersystemen darstellen,
**dadurch gekennzeichnet**, dass
die Aktivierung der Busteilnehmer (**1, 2, 3, 4, 5 und 6**) durch Lichtstrahlung **L** ausgelöst wird.

2. Verfahren zum eineindeutigen Aktivieren von Busteilnehmern nach **Anspruch 1,**
**dadurch gekennzeichnet**, dass
die Lichtstrahlung **L** von parallel verlaufenden Lichtstrahlen gebildet wird.

3. Verfahren zum eineindeutigen Aktivieren von Busteilnehmern nach **Anspruch 2,**
**dadurch gekennzeichnet**, dass
die Lichtstrahlen mit einer Laserlichtquelle (**14**) erzeugt werden.

4. Verfahren zum eineindeutigen Aktivieren von Busteilnehmern nach einem der vorangehenden **Ansprüche**,
**dadurch gekennzeichnet**, dass
zur Verbesserung der Selektivität die Informationsübertragung über polarisiertes Licht durchgeführt wird.

5. Verfahren zum eineindeutigen Aktivieren von Busteilnehmern nach einem der vorangehenden **Ansprüche,**
**dadurch gekennzeichnet**, dass
den Lichtstrahlen ein Code zur Identifikation des Selektionsgerätes aufmoduliert wird.

6. Verfahren zum eineindeutigen Aktivieren von Busteilnehmern nach einem der vorangehenden **Ansprüche,**
**dadurch gekennzeichnet**, dass
zusätzlich zur Aktivierung des Busteilnehmers über die Lichtstrahlen eine physische Adressvergabe durchgeführt wird.

7. Verfahren zum eineindeutigen Aktivieren von Busteilnehmern nach **Anspruch 6,**
**dadurch gekennzeichnet**, dass
zusätzlich zur Aktivierung des Busteilnehmers über die Lichtstrahlen ein Programmdownload abgewickelt wird.

8. Verfahren zum eineindeutigen Aktivieren von Busteilnehmern nach einem der **Ansprüche 2 bis 5,**
**dadurch gekennzeichnet**, dass
der aktivierte Busteilnehmer eine Aktivierungsmeldung über den Bus sendet und ein dazu vorgesehener Busteilnehmer dem zu adressierenden Busteilnehmer via Bus eine Adresse mitteilt.

9. Verfahren zum eineindeutigen Aktivieren von Busteilnehmern nach einem der **Ansprüche 2 bis 5,**
**dadurch gekennzeichnet**, dass
für alle Busteilnehmer eine globale Freigabe zur Aktivierung der physikalischen Adressierung vorgesehen wird, die durch ein über den Bus übermitteltes Freigabetelegramm erfolgt und nach Abschluss der Servicephase ein Inhibittelegramm weitere Aktivierungen unterbindet.

10. Vorrichtung zum eineindeutigen Aktivieren von Busteilnehmern nach einem der vorangehenden **Ansprüche,**
in der ein mit dem Busteilnehmer (**11, 15**) verbundener Lichtsensor (**17**) vorgesehen ist, der durch eine gerichtetes, sichtbares Licht aussendende Lichtquelle (**14**) veranlassbar ist ein digitales Signal zu erzeugen, über welchen sich der Busteilnehmer (**11, 15**) aktivieren lässt.

11. Vorrichtung zum eineindeutigen Aktivieren von Busteilnehmern nach **Anspruch 10**,
**dadurch gekennzeichnet**, dass
der Lichtsensor (**17**) als optoelektronischer Empfänger mit Schmitt-Trigger Ausgang (**19**) ausgebildet ist.

12. Vorrichtung zum eineindeutigen Aktivieren von Busteilnehmern nach **einem der Ansprüche 10 oder 11,**
**dadurch gekennzeichnet**, dass
als Lichtquelle ein Laserpointer (**14**) vorgesehen ist.

13. Vorrichtung zum eineindeutigen Aktivieren von Busteilnehmern nach **Anspruch 12**,
**dadurch gekennzeichnet**, dass
der Laserpointer (**14**) mit einem Codegenerator (**20**) und einem entsprechenden Modulator (**21**) und der Busteilnehmer (**11, 15**) mit einem Codedetektor (**22**) verbunden ist.

14. Vorrichtung zum eineindeutigen Aktivieren von Busteilnehmern nach **Anspruch 12**,
**dadurch gekennzeichnet**, dass
der Laserpointer (**14**) mit einem Codegenerator (**20**) und einem entsprechenden Modulator (**21**) und der Busteilnehmer (**11, 15**) mit einem Mikroprozessor (**23**) verbunden ist.
